# EUROPEAN PATENT SPECIFICATION

(11) **EP 4 450 889 B1**
(45) Date of publication and mention of the grant of the patent: **06.05.2026**
(21) Application number: 22907015.6
(22) Date of filing: 21.10.2022
(51) Int. Cl.: F24F 11/74, F24F 110/70, F24F 120/10, F24F 7/007, F24F 7/08

(54) **VENTILATION SYSTEM**
LÜFTUNGSSYSTEM
SYSTÈME DE VENTILATION

(30) Priority: 17.12.2021 JP 2021204824
(43) Date of publication of application: 23.10.2024
(73) Proprietor: Daikin Industries, Ltd., Osaka-shi, Osaka 530-0001 (JP)
(72) Inventor: MIYAZAKI, Takeru, Osaka-shi, Osaka 530-0001 (JP); YAMANOI, Yoshiki, Osaka-shi, Osaka 530-0001 (JP); IYOSHI, Yuta, Osaka-shi, Osaka 530-0001 (JP); SAEKI, Kumiko, Osaka-shi, Osaka 530-0001 (JP); MATSUOKA, Hiromune, Osaka-shi, Osaka 530-0001 (JP); KOMATSU, Akira, Osaka-shi, Osaka 530-0001 (JP); TAKAHASHI, Takashi, Osaka-shi, Osaka 530-0001 (JP); ODO, Tsunahiro, Osaka-shi, Osaka 530-0001 (JP); TSURUZONO, Shota, Osaka-shi, Osaka 530-0001 (JP)
(74) Representative: Goddar, Heinz J.
(86) International application number: PCT/JP2022/039233
(87) International publication number: WO 2023/112481

(56) References cited:
- WO-A1-2019/082377
- WO-A1-2019/146121
- AU-A1- 2020 259 881
- JP-A- 2000 220 877
- JP-A- 2006 317 078
- JP-A- 2013 124 788
- JP-A- 2014 077 584
- JP-A- 2020 183 838
- JP-A- 2021 101 139
- JP-A- S61 197 932
- KR-A- 20210 046 366
- US-A1- 2019 154 270
- US-B2- 9 903 604

## Description

### TECHNICAL FIELD

The present invention relates to a ventilation system.

### BACKGROUND ART

Patent Literature 1 discloses a ventilation system (heat recovery outdoor air conditioning system) capable of first type ventilation. This ventilation system includes a heat exchanger, a supply air path and exhaust air path that allow the inside and outside of a target space to communicate with each other via the heat exchanger, an air supply fan that supplies air outside the target space to the target space via the supply air path, and an exhaust fan that exhausts air in the target space to the outside of the target space via the exhaust air path.

In the above ventilation system, the heat exchanger of a heat pump outdoor air conditioner recovers heat from the return air in the indoor zone and then exhausts the heat to the outdoors, and uses the recovered heat for heat exchange with outside air from outdoors to supply the air to the indoor zone.

### CITATION LIST

### [PATENT LITERATURE]

PATENT LITERATURE 1: Japanese Laid-Open Patent Publication No. 03-20573

US 2019/154270 A1 discloses a ventilation system comprising a refrigerant circuit that circulates refrigerant through a compressor, a first heat exchanger, and a second heat exchanger, a first air supply fan that supplies outdoor air to an indoor space, an exhaust fan that exhausts indoor air to an outdoor space, an air supply path that connects the outdoor space to the indoor space, and an exhaust air path that connects the outdoor space to the indoor space and has an interior in which the second heat exchanger and the exhaust fan are arranged.

AU 2020 259881 A1 discloses a first air supply detector for detecting a first supply air flow blown out by a first air supply fan, a second air supply detector for detecting a second supply airflow blown out by a second air supply fan, and a control unit, wherein the control unit executes first air supply control to adjust a rotational speed of the first air supply fan so that the first supply airflow becomes a target value, and a second air supply control to adjust a rotational speed of the second air supply fan so that the second supply airflow becomes a target value.

US 9 903 604 B2 establishes technological background.

### SUMMARY OF THE INVENTION

### [TECHNICAL PROBLEM]

Since the conventional ventilation system is configured by the air supply fan, the exhaust fan, and the heat exchanger being housed in a single casing, it is not assumed, for example, to supply the supply air subjected to a heat exchange to a plurality of areas or to adjust the amount of supply air for each of the plurality of areas.

An object of the present invention is to provide a ventilation system capable of supplying supply air subjected to a heat exchange to a plurality of areas in an airflow adjustable manner.

### [SOLUTION TO PROBLEM]

(1) A ventilation system according to the present invention is defined in claim 1.

In the ventilation system according to the present invention, the first heat exchanger and the first air supply fan and second air supply fan located further toward an indoor side than the first heat exchanger are included in the interior of the air supply path, so that the supply air subjected to a heat exchange can be supplied to the plurality of areas.

In addition, since the control unit executes the first air supply control and the second air supply control, it is possible to adjust each of the first supply airflow and the second supply airflow. Thus, the supply air subjected to a heat exchange can be supplied to the plurality of areas in an airflow adjustable manner.

(2) In a case where the ventilation system according to the present invention further includes a monitoring sensor for detecting state information that is at least one of an indoor air state, presence or absence of people indoors, and number of people indoors, the control unit may determine the target value of the first supply airflow and the target value of the second supply airflow on the basis of a detection result of the monitoring sensor.

In this case, since the control unit determines the target value of the first supply airflow and the target value of the second supply airflow on the basis of the detection result of the monitoring sensor, ventilation contributing to the improvement of the indoor environment (for example, ventilation that decreases the CO2 concentration) can be performed for each area.

(3) In a case where the ventilation system according to the present invention further includes an exhaust detector for detecting an exhaust airflow blown out by the exhaust fan, the control unit may execute exhaust control to adjust a rotational speed of the exhaust fan so that the exhaust airflow becomes a target value.

In this case, since the control unit executes the exhaust control, the exhaust airflow can be adjusted. Thus, for example, appropriate ventilation can be performed by balancing the sum of the first supply airflow and the second supply airflow with the exhaust airflow.

(4) In the ventilation system according to the present invention, the control unit may determine the target value of the exhaust airflow and a controlled variable for the refrigerant circuit on the basis of the target value of the first supply airflow and the target value of the second supply airflow.

In this case, since the control unit determines the target value of the exhaust airflow and a controlled variable for the refrigerant circuit on the basis of the target value of the first supply airflow and the target value of the second supply airflow, for example, the refrigerant circuit can be controlled with an appropriate heat recovery amount while balancing the sum of the first supply airflow and the second supply airflow with the exhaust airflow.

(5) In the ventilation system according to the present invention, the control unit may include: a main controller that determines the target value of the first supply airflow, the target value of the second supply airflow, the target value of the exhaust airflow, and the controlled variable for the refrigerant circuit; a first controller that executes the first air supply control; a second controller that executes the second air supply control; and a third controller that executes the exhaust control.

In this case, the first to third controllers adjust the fan speed based on the target value, and the main controller determines the target value of each airflow and the controlled variable for the refrigerant circuit, so that the processing load on the main controller can be suppressed as compared with the case where the main controller is responsible for all processing. Therefore, for example, the manufacturing cost of the ventilation system can be reduced by, for example, using a controller for an air conditioner as the main controller.

(6) The ventilation system according to the present invention may further include:
a first air supply unit that includes the first air supply fan, the first air supply detector, and the first controller and is capable of autonomously adjusting the first supply airflow; and a second air supply unit that includes the second air supply fan, the second air supply detector, and the second controller and is capable of autonomously adjusting the second supply airflow.

In this case, the first air supply unit and the second air supply unit can be placed in the same room or in different rooms, for example depending on user needs. Thus, the flexibility of the installation places of the air supply units is improved.

(7) The ventilation system according to the present invention may further include an exhaust unit that includes the exhaust fan, the exhaust detector, and the third controller and is capable of autonomously adjusting the exhaust airflow.

In this case, the exhaust unit can be placed indoors or outdoors, for example depending on user needs. Thus, the flexibility of the installation place of the exhaust unit is improved.

### BRIEF DESCRIPTION OF DRAWINGS

FIG. 1 is a longitudinal sectional view of a building illustrating an example of the overall configuration of a ventilation system.
FIG. 2 is a block diagram illustrating an example of the control system of a control unit.
FIG. 3 is a flowchart illustrating an example of information processing of a main controller.
FIG. 4 is a flowchart illustrating an example of determination processing for the target value of supply airflow.
FIG. 5 is a flowchart illustrating an example of information processing of a first controller.
FIG. 6 is a flowchart illustrating an example of information processing of a second controller.
FIG. 7 is a flowchart illustrating an example of information processing of a third controller.
FIG. 8 is a longitudinal sectional view of a building illustrating another example of the overall configuration of the ventilation system.

### DETAILED DESCRIPTION

### Overall Configuration of Ventilation System

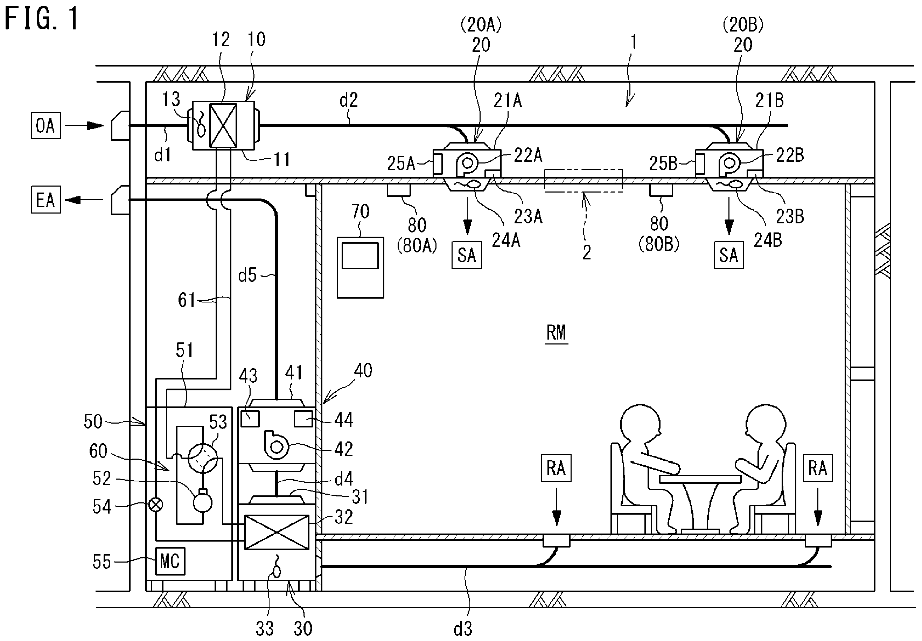

FIG. 1 is a longitudinal sectional view of a building illustrating an example of the overall configuration of a ventilation system 1.

In FIG. 1, reference signs "OA", "SA", "RA", and "EA" have the following meanings.
OA: Outdoor air (outside air). This is also the air that the system 1 draws in from outdoors.
SA: Air (supply air) that the system 1 sends indoors.
RA: Indoor air (return air). This is also the air that the system 1 draws in from indoors.
EA: Air (exhaust air) that the system 1 discharges outdoors.

The ventilation system 1 according to the present embodiment provides first-type ventilation for an indoor target space RM while performing temperature adjustment for the supply air SA and heat recovery from the return air RA. The target space RM is, for example, the indoor space of various buildings such as an office building, a hospital, and a factory.

The target space RM is preferably an airtight room for a predetermined use, but may be, for example, an indoor corridor, a staircase, an entrance, or the like. Furthermore, in the target space RM, an indoor unit 2 of an air conditioning system separate from the ventilation system 1 may be installed.

As illustrated in FIG. 1, the ventilation system 1 includes a heat exchange unit 10 on the utilization side (air supply side), an air supply unit 20, a heat exchange unit 30 on the recovery side (exhaust side), an exhaust unit 40, a compressor unit 50, and a refrigerant circuit 60.

The heat exchange unit 10 and the air supply unit 20 are installed in the ceiling space of the target space RM, and the heat exchange unit 30, the exhaust unit 40, and the compressor unit 50 are installed inside the wall of the target space RM.

The ventilation system 1 further includes an input device 70 that is an input equipment allowing users to input operations, and a monitoring sensor 80. The input device 70 is, for example, a remote controller attached to the wall surface of the target space RM. The input device 70 may be installed in a room different from the target space RM, such as a management room (not illustrated).

The monitoring sensor 80 monitors an indoor air state, and is capable of wired or wireless communication conforming to a predetermined communication standard. In the present embodiment, the monitoring sensor 80 is assumed to be a CO2 sensor that is attached to the ceiling surface of the target space RM and that detects CO2 concentration.

The installation position of each unit illustrated in FIG. 1 is an example, and for example, the heat exchange unit 30 and the exhaust unit 40 may be arranged in the ceiling space, and the return air RA may be drawn in from the ceiling side.

Alternatively, at least one of the heat exchange unit 30, the exhaust unit 40, and the compressor unit 50 may be installed outdoors.

The ventilation system 1 includes a plurality of (two in the illustrated example) air supply units 20 of the same product. Hereinafter, one of the plurality of air supply units 20 is referred to as a first air supply unit 20A, and the other is referred to as a second air supply unit 20B.

The ventilation system 1 includes a plurality of (two in the illustrated example) CO2 sensors 80 of the same product. Hereinafter, one of the plurality of CO2 sensors 80 is referred to as a first CO2 sensor 80A, and the other is referred to as a second CO2 sensor 80B.

In the present embodiment, the first CO2 sensor 80A satisfies the following installation condition 1, and the second CO2 sensor 80B satisfies the following installation condition 2.

Installation Condition 1: The distance (for example, within 1 m) from the first CO2 sensor 80A to the first air supply unit 20A is shorter than the distance from the first CO2 sensor 80A to the second air supply unit 20B.

Installation Condition 2: The distance (for example, within 1 m) from the second CO2 sensor 80B to the second air supply unit 20B is shorter than the distance from the second CO2 sensor 80B to the first air supply unit 20A.

### Components of Each Unit

The heat exchange unit 10 on the utilization side has a casing 11 and a plurality of devices housed in the casing 11. The plurality of devices includes a utilization-side heat exchanger (hereinafter referred to as "first heat exchanger") 12, which is an element device of the refrigerant circuit 60, and an outside air temperature sensor 13.

The first heat exchanger 12 is, for example, a cross-fin tube or microchannel heat exchanger, and exchanges heat between the refrigerant flowing inside the first heat exchanger 12 and the outside air OA.

The first air supply unit 20A has a casing 21A and a plurality of devices housed in the casing 21A. The plurality of devices includes a first air supply fan 22A, a first air supply detector 23A, a first supply air temperature sensor 24A, and a first controller 25A.

The first air supply fan 22A is, for example, a centrifugal fan with controllable fan speed. The first air supply detector 23A is, for example, an airflow sensor for detecting airflow, or a sensor for detecting air velocity, differential pressure, fan speed, or the like (hereinafter referred to as "airflow equivalent"), which are physical quantities from which the airflow is calculated. Therefore, if the first controller 25A has the function of counting the fan speed, the first controller 25A also serves as the first air supply detector 23A.

The first controller 25A is, for example, a control module including a circuit board and an integrated circuit such as a central processing unit (CPU) and memory mounted on the circuit board. The integrated circuit may include at least a field-programmable gate array (FPGA) or an application-specific IC (ASIC).

The first controller 25A is capable of communication control with other controllers and sensors conforming to a predetermined communication standard, and is capable of performing predetermined information processing such as control for adjusting the fan speed so that the airflow of the first air supply fan 22A becomes a target value.

The second air supply unit 20B has a casing 21B and a plurality of devices housed in the casing 21B. The plurality of devices includes a second air supply fan 22B, a second air supply detector 23B, a second supply air temperature sensor 24B, and a second controller 25B.

The second air supply fan 22B is, for example, a centrifugal fan with controllable fan speed. The second air supply detector 23B is, for example, an airflow sensor for detecting airflow or a sensor for detecting the airflow equivalent. Therefore, if the second controller 25B has the function of counting the fan speed, the second controller 25B also serves as the second air supply detector 23B.

The second controller 25B is, for example, a control module including a circuit board and an integrated circuit such as a CPU and memory mounted on the circuit board. The integrated circuit may include at least the FPGA or the ASIC.

The second controller 25B is capable of communication control with other controllers and sensors conforming to a predetermined communication standard, and is capable of performing predetermined information processing such as control for adjusting the fan speed so that the airflow of the second air supply fan 22B becomes a target value.

The heat exchange unit 30 on the recovery side has a casing 31 and a plurality of devices housed in the casing 31. The plurality of devices includes a recovery-side heat exchanger (hereinafter referred to as "second heat exchanger") 32, which is an element device of the refrigerant circuit 60, and a return air temperature sensor 33.

The second heat exchanger 32 is, for example, a cross-fin tube or microchannel heat exchanger, and exchanges heat between the refrigerant flowing inside the second heat exchanger 32 and the return air RA.

The exhaust unit 40 has a casing 41 and a plurality of devices housed in the casing 41. The plurality of devices includes an exhaust fan 42, an exhaust detector 43, and a third controller 44.

The exhaust fan 42 is, for example, a centrifugal fan with controllable fan speed. The exhaust detector 43 is, for example, an airflow sensor for detecting airflow or a sensor for detecting the airflow equivalent. Therefore, if the third controller 44 has the function of counting the fan speed, the third controller 44 also serves as the air exhaust detector 43.

The third controller 44 is, for example, a control module including a circuit board and an integrated circuit such as a CPU and memory mounted on the circuit board. The integrated circuit may include at least the FPGA or the ASIC.

The third controller 44 is capable of communication control with other controllers and sensors conforming to a predetermined communication standard, and is capable of performing predetermined information processing such as control for adjusting the fan speed so that the airflow of the exhaust fan 42 becomes a target value.

The compressor unit 50 includes a casing 51 and a plurality of devices housed in the casing 51. The plurality of devices includes a compressor 52, a four-way valve 53, an expansion valve 54, and a main controller 55.

The refrigerant circuit 60 circulates refrigerant through the compressor 52, the first heat exchanger 12, and the second heat exchanger 32, and has the compressor 52, the four-way valve 53, the expansion valve 54, the first heat exchanger 12, the second heat exchanger 32, and a refrigerant pipe 61 that connects these components.

The main controller 55 is, for example, a control module including a circuit board and an integrated circuit such as a CPU and memory mounted on the circuit board. The integrated circuit may include at least the FPGA or the ASIC.

The main controller 55 is capable of performing communication control with other controllers and sensors conforming to a predetermined communication standard and of performing predetermined information processing such as determination of a controlled variable for the refrigerant circuit 60 according to the ventilation rate.

### Air Supply Path and Exhaust Air Path of Ventilation System

In the ceiling space of the target space RM, the suction port of the casing 11 communicates with an air supply port outdoors through a duct d1.

In the ceiling space of the target space RM, the suction ports of the casings 21A and 21B are airtightly connected to the blow-out port of the casing 11 by a duct d2 being a branch pipe. The blow-out ports of the casings 21A and 21B are exposed from the ceiling surface to the target space RM.

Therefore, the air path formed by the duct d1, the casing 11, the duct d2, and the casings 21A and 21B connects the outdoor space to the indoor space, and constitutes an "air supply path" having an interior in which the first heat exchanger 12 and the first and second air supply fans 22A and 22B located further toward the indoor side than the first heat exchanger 12 are arranged.

Note that a blow-out unit (not illustrated) having a filter, a wind direction plate, and the like may be coupled to the blow-out side of the casings 21A and 21B via a duct or directly, and the blow-out unit may be exposed from the ceiling surface to the target space RM. In addition, a humidifying unit or a filter unit (not illustrated) that collects microparticles (such as PM 2.5) may be provided at points on the ducts d1 and d2. In this case, the casing of each of the above units may also be a component of the air supply path.

Under the floor of the target space RM, the suction port of the casing 31 is airtightly connected to the air supply port in the floor surface by a duct d3 including a branch pipe.

Inside the wall of the target space RM, the suction port of the casing 41 is airtightly connected to the blow-out port of the casing 31 by a duct d4. The blow-out port of the casing 41 communicates with an exhaust port outdoors through a duct d5.

Therefore, the air path formed by the duct d3, the casing 31, the duct d4, the casing 41, and the duct d5 connects the outdoors to the indoors, and constitutes an "exhaust air path" in which the second heat exchanger 32 and the exhaust fan 42 are disposed.

When the first air supply fan 22A and the second air supply fan 22B are driven, the duct d1, the casing 11, and the duct d2 in the air supply path become negative pressure, and the outside air OA is drawn into the duct d1.

At this time, the outside air temperature sensor 13 detects the temperature of the outside air OA before heat exchange with the first heat exchanger 12. The air subjected to heat exchange in the first heat exchanger 12 passes through the duct d2 and the casings 21A and 21B and is delivered indoors as the supply air SA. At this time, the first and second supply air temperature sensors 24A and 24B detect the temperature of the supply air SA.

When the exhaust fan 42 is driven, the duct d4, the casing 31, and the duct d3 in the exhaust air path become negative pressure, and the return air RA is drawn into the duct d3.

At this time, the return air temperature sensor 33 detects the temperature of the return air RA before heat exchange with the second heat exchanger 32. The air after the heat exchange with the second heat exchanger 32 passes through the casing 41 and the duct d5 and is delivered outdoors as the exhaust air EA.

In the ventilation system 1 in FIG. 1, the exhaust air path may be configured such that the heat exchange unit 30 is located on the blow-out side (downstream side in the exhaust direction) of the exhaust unit 40.

In the ventilation system 1 in FIG. 1, the heat exchange unit 30 and the exhaust unit 40 may be an integrated unit housed in the same casing.

### Element Device of Refrigerant Circuit and Temperature Adjustment Operation

The compressor 52 is an element device of the refrigerant circuit 60, sucking in low-pressure gaseous refrigerant and discharging high-pressure gaseous refrigerant.

The compressor 52 is, for example, a variable displacement type (variable capacity type), the displacement of which is variable by the inverter control of an electric motor. However, the compressor 52 may be of a constant-displacement type or two or more compressors 52 may be connected in parallel.

The expansion valve 54 is, for example, an electric valve for adjusting the flow rate and pressure of the refrigerant in the pipe 61. The refrigerant pressure to the first heat exchanger 12 is adjusted by controlling the opening degree of the expansion valve 54.

The four-way valve 53 reverses the flow direction of the refrigerant in the circuit, and switches the refrigerant discharged from compressor 52 to either first heat exchanger 12 or second heat exchanger 32. Therefore, the temperature adjustment operation that can be executed by the ventilation system 1 includes "cold air supply" in which the outside air OA is cooled and supplied indoors, and "warm air supply" in which the outside air OA is heated and supplied indoors.

Specifically, in the case of cold air supply in which cold air obtained by cooling the outside air OA is used as the supply air SA, the four-way valve 53 is maintained in the state indicated by the solid line in FIG. 1.

In this case, the first heat exchanger 12 on the utilization side functions as an evaporator and cools the outside air OA, and the second heat exchanger 32 on the recovery side functions as a condenser and heats the return air RA. The heating of the return air RA corresponds to heat recovery from the return air RA.

Meanwhile, in the case of the warm air supply in which warm air obtained by heating the outside air OA is used as the supply air SA, the four-way valve 53 is maintained in the state indicated by the broken line in FIG. 1.

In this case, the first heat exchanger 12 on the utilization side functions as a condenser and heats the outside air OA, and the second heat exchanger 32 on the recovery side functions as an evaporator and cools the return air RA. The cooling of the return air RA corresponds to heat recovery from the return air RA.

In the ventilation system 1 according to the present embodiment, the four-way valve 53 of the refrigerant circuit 60 may be omitted. In this case, the first heat exchanger 12 is used only as either an evaporator or a condenser, resulting in the ventilation system 1 that performs only the cold air supply or the warm air supply.

### Control System of Ventilation System

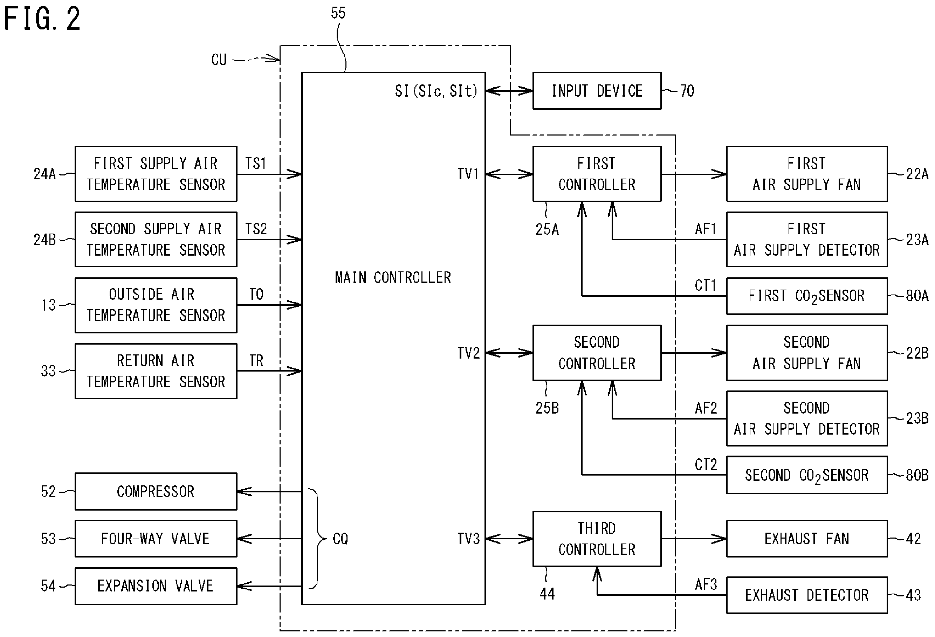

FIG. 2 is a block diagram illustrating an example of the control system of the ventilation system 1.

The meanings of the parameters included in FIG. 2 are as follows.
SI: Setting information that can be input to the input device 70. For example, the following SIc and SIt are included:
   SIc: Supply airflow rate identification information defined in stages (such as "breeze", "weak wind", "medium wind", and "strong wind", or identification numbers from "level 1" to "level 4")
   SIt: Set temperature of the supply air SA
TS1: Detection result of the first supply air temperature sensor 24A (supply air temperature of the first air supply fan)
TS2: Detection result of the second supply air temperature sensor 24B (supply air temperature of the second air supply fan)
TO: Detection result of the outside air temperature sensor 13 (outside air temperature)
TR: Detection result of the return air temperature sensor 33 (return air temperature)
AF1: Airflow (first supply airflow) blown out by the first air supply fan 22A

However, if the first air supply detector 23A is an airflow sensor, AF1 is the detection result of the sensor, and if the first air supply detector 23A is a sensor that detects an airflow equivalent, AF1 is the airflow calculated from the detection result of the sensor. AF1 may be the airflow calculated from the fan speed counted by the first controller 25A.
AF2: Airflow (second supply airflow) blown out by the second air supply fan 22B

However, if the second air supply detector 23B is an airflow sensor, AF2 is the detection result of the sensor, and if the second air supply detector 23B is a sensor that detects an airflow equivalent, AF2 is the airflow calculated from the detection result of the sensor. AF2 may be the airflow calculated from the fan speed counted by the second controller 25B.
AF3: Airflow (exhaust airflow) blown out by the exhaust fan 42

However, if the exhaust detector 43 is an airflow sensor, AF3 is the detection result of the sensor, and if the exhaust detector 43 is a sensor that detects an airflow equivalent, AF3 is the airflow calculated from the detection result of the sensor. AF3 may be the airflow calculated from the fan speed counted by the third controller 44.
CT 1: Detection result of the first CO2 sensor 80A (CO2 concentration near the first air supply fan)
CT2: Detection result of the second CO2 sensor 80B (CO2 concentration near the second air supply fan)
TV1: Target value of airflow (first supply airflow) blown out by the first air supply fan 22A
TV2: Target value of airflow (second supply airflow) blown out by the second air supply fan 22B
TV3: Target value of airflow (exhaust airflow) blown out by the exhaust fan 42
CQ: Controlled variable (compressor discharge amount, refrigerant flow rate or direction, and the like) for the refrigerant circuit 60

As illustrated in FIG. 2, the control system of the ventilation system 1 includes a control unit CU composed of a group of controllers that perform wired or wireless communication. The control unit CU includes, for example, the main controller 55, the first controller 25A, the second controller 25B, and the third controller 44.

The main controller 55 is connected to the input device 70. When the user inputs SI to the input device 70, the input device 70 transmits the SI to the main controller 55. The main controller 55 records the received SI in its own memory.

The main controller 55 is connected to each of the temperature-related sensors 24A, 24B, 13, and 33. The main controller 55 receives TS1, TS2, TO, and TR from the sensors 24A, 24B, 13, and 33.

If the first supply air temperature sensor 24A is connected to the first controller 25A, the TS1 may be transmitted to the main controller 55 with the first controller 25A as a relay node.

If the second supply air temperature sensor 24B is connected to the second controller 25B, the TS2 may be transmitted to the main controller 55 with the second controller 25B as a relay node.

The main controller 55 is connected to the first controller 25A, the second controller 25B, and the third controller 44.

Upon determining TV1, the main controller 55 transmits the determined TV1 to the first controller 25A, upon determining the TV2, the main controller 55 transmits the determined TV2 to the second controller 25B, and upon determining TV3, the main controller 55 transmits the determined TV3 to the third controller 44.

The main controller 55 is connected to the compressor 52, the four-way valve 53, and the expansion valve 54. Upon determining CQ, the main controller 55 outputs the determined CQ to at least one of the compressor 52, the four-way valve 53, and the expansion valve 54.

The first controller 25A is connected to the first air supply fan 22A, the first air supply detector 23A, and the first CO2 sensor 80A.

The first controller 25A transfers the CT1 received from the first CO2 sensor 80A to the main controller 55. If the first CO2 sensor 80A is connected to the main controller 55, the CT1 is directly transmitted to the main controller 55.

If the first air supply detector 23A is an airflow sensor, the first controller 25A sets the detection result received from the detector 23A as AF1.

If the first air supply detector 23A is an airflow equivalent sensor, the first controller 25A calculates AF1 from the detection result received from the detector 23A. The first controller 25A may set the airflow calculated from the fan speed counted by itself as AF1.

Upon receiving the TV1, the first controller 25A calculates the fan speed on the basis of the TV1 and the AF1, and outputs the calculated speed to the first air supply fan 22A.

The second controller 25B is connected to the second air supply fan 22B, the second air supply detector 23B, and the second CO2 sensor 80B.

The second controller 25B transfers the CT2 received from the second CO2 sensor 80B to the main controller 55. If the second CO2 sensor 80B is connected to the main controller 55, the CT2 is directly transmitted to the main controller 55.

If the second air supply detector 23B is an airflow sensor, the second controller 25B sets the detection result received from the detector 23B as AF2.

If the second air supply detector 23B is an airflow equivalent sensor, the second controller 25B calculates AF2 from the detection result received from the detector 23B. The second controller 25B may set the airflow calculated from the fan speed counted by itself as AF2.

Upon receiving the TV2, the second controller 25B calculates the fan speed on the basis of the TV2 and the AF2, and outputs the calculated speed to the second air supply fan 22B.

The third controller 44 is connected to the exhaust fan 42 and the exhaust detector 43.

If the exhaust detector 43 is an airflow sensor, the third controller 44 sets the detection result received from the detector 43 as AF3.

If the exhaust detector 43 is an airflow equivalent sensor, the third controller 44 calculates AF3 from the detection result received from the detector 43. The third controller 44 may set the airflow calculated from the fan speed counted by itself as AF3.

Upon receiving the TV3, the third controller 44 calculates the fan speed on the basis of the TV3 and the AF3, and outputs the calculated speed to the exhaust fan 42.

### Information Processing of Main Controller

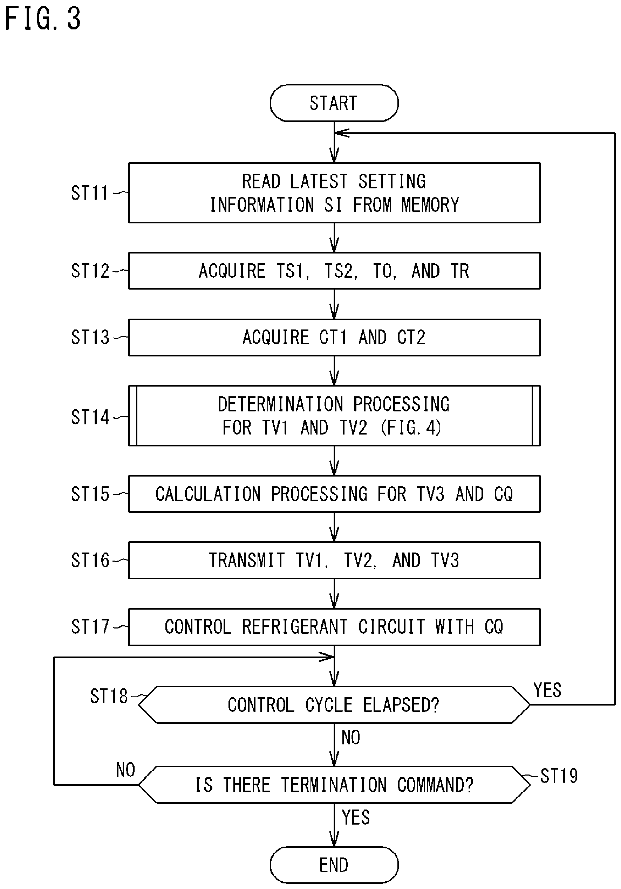

FIG. 3 is a flowchart illustrating an example of information processing of the main controller 55.

As illustrated in FIG. 3, the main controller 55 reads the latest setting information SI from the memory after startup (step ST11).

Next, the main controller 55 acquires TS1, TS2, TO, and TR, which are detection results related to temperature (step ST12), and acquires CT1 and CT2, which are the detection result of CO2 concentration in the target space RM (step ST13).

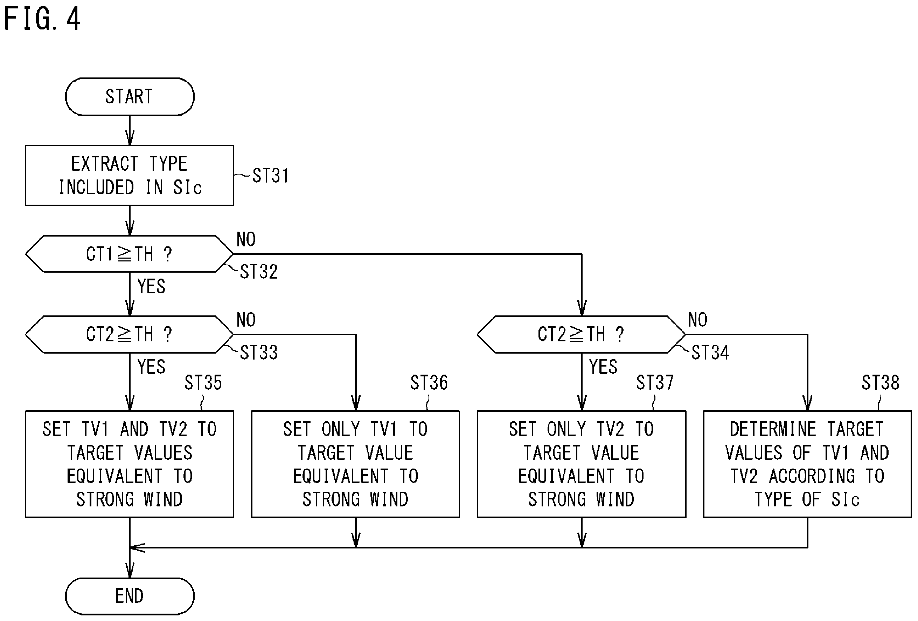

Then the main controller 55 executes determination processing for the TV1 and TV2, which are the target values of supply airflow (step ST14). Details of this determination processing (FIG. 4) will be described later.

Next, the main controller 55 executes calculation processing for TV3, which is the target value of exhaust airflow, and CQ, which is a controlled variable for the refrigerant circuit 60 (step ST15). This calculation processing calculates the TV3 and the CQ on the basis of the TV1 and TV2 determined in the current control cycle.

For example, the main controller 55 determines the TV3 using the formula of TV3 = TV1 + TV2 to balance the air supply and exhaust amount for the target space RM.

In addition, the main controller 55 calculates a temperature adjustment load for bringing the supply air SA to the set temperature SIt from the TV1 to TV3 determined in the current control cycle and the current TS1, TS2, TO, and TR, and determines CQ, which is a controlled variable for the refrigerant circuit 60, on the basis of the calculated temperature adjustment load.

Next, the main controller 55 transmits the determined TV1 to TV3 to the controllers 25A, 25B, and 44, respectively (step ST16).

Specifically, the main controller 55 transmits the TV1 to the first controller 25A, transmits the TV2 to the second controller 25B, and transmits the TV3 to the third controller 44.

Next, the main controller 55 controls the refrigerant circuit 60 with the CQ determined in the step ST15 (step ST17), and determines whether or not a predetermined control cycle (for example, 30 seconds) has elapsed (step ST18).

If the determination result in the step ST18 is positive, the main controller 55 returns the process to before the step ST11.

If the determination result in the step ST18 is negative, the main controller 55 determines the presence or absence of a termination command from the input device 70 (step ST19).

If the determination result in the step ST19 is negative, the main controller 55 returns the process to before the ST18. If the determination result in step ST19 is positive, the main controller 55 terminates the process.

### Determination Processing for Target Value of Supply Airflow

FIG. 4 is a flowchart illustrating an example of determination processing (step ST14 in FIG. 3) for the target value of supply airflow.

Here, it is assumed that there are four types of supply airflow that can be designated using SIc, that is, breeze, weak wind, medium wind, and strong wind, and the type designated by the user using SIc is "breeze". Furthermore, the memory of the main controller 55 holds a reference table that defines the correspondence relationship between the type of supply airflow and the target values TV1 and TV2 of supply airflow.

As illustrated in FIG. 4, the main controller 55 extracts the type (= breeze) included in the acquired SIc (step ST31).

Next, the main controller 55 determines whether CT1 ≥ TH (step ST32). "TH" is a CO2 concentration threshold set in advance to determine whether or not strong ventilation is required, and is set to, for example, 1000 ppm.

If the determination result in step ST32 is positive, the main controller 55 determines whether CT2 ≥ TH (step ST33).

Even if the determination result in step ST32 is negative, the main controller 55 determines whether CT2 ≥ TH (step ST34).

If the determination result in step ST33 is positive, the main controller 55 sets TV1 and TV2 to the target values equivalent to strong wind regardless of the type (= breeze) extracted from SIc (step ST35).

Specifically, the main controller 55 reads the target value of supply airflow corresponding to "strong wind" from the reference table and sets the read target values as TV1 and TV2.

If the determination result in step ST33 is negative, the main controller 55 sets only TV1 to the target value equivalent to strong wind (step ST36), and follows the extracted type (= breeze) for TV2.

Specifically, the main controller 55 reads the target values of supply airflow corresponding to "strong wind" and "breeze" from the reference table, and sets the target value corresponding to "strong wind" as TV1 and the target value corresponding to "breeze" as TV2.

If the determination result in step ST34 is positive, the main controller 55 sets only TV2 to the target value corresponding to strong wind (step ST37), and follows the extracted type (= breeze) for TV1.

Specifically, the main controller 55 reads the target values of supply airflow corresponding to "strong wind" and "breeze" from the reference table, and sets the target value corresponding to "strong wind" as TV2 and the target value corresponding to "breeze" as TV1.

If the determination result in step ST34 is negative, the target values of TV1 and TV2 are set according to the extracted type (= breeze) of SIc (step ST35).

Specifically, the main controller 55 reads the target value of supply airflow corresponding to "breeze" from the reference table and sets the read target values as TV1 and TV2.

### Information Processing of First Controller

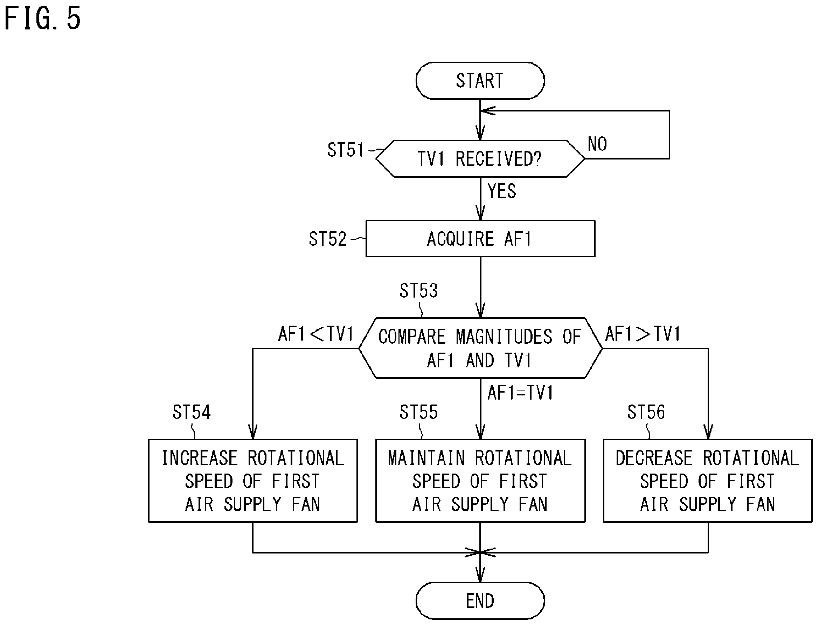

FIG. 5 is a flowchart illustrating an example of information processing of the first controller 25A.

As illustrated in FIG. 5, after startup, the first controller 25A determines whether or not TV1 has been received from the main controller 55 (step ST51), and if so, acquires AF1 from the detection result of the first air supply detector 23A (step ST52).

Next, the first controller 25A compares the magnitudes of the AF1 and the TV1 (step ST53), and executes the following processing according to the comparison result.

That is, if AF1 < TV1, the first controller 25A increases the rotational speed of the first air supply fan 22A by a predetermined amount (step ST54). If AF1 =TV1, the rotational speed is maintained (step ST55), and if AF1 > TV1, the rotational speed is decreased by a predetermined amount (step ST56).

In this manner, the first controller 25A autonomously adjusts the rotational speed of its own first air supply fan 22A on the basis of the TV1 received from the main controller 55 and the AF1 that can be detected by its own detector 23A.

Therefore, the first air supply unit 20A, including the first air supply fan 22A, the first air supply detector 23A, and the first controller 25A, corresponds to a unit capable of autonomously adjusting the first supply airflow AF1.

### Information Processing of Second Controller

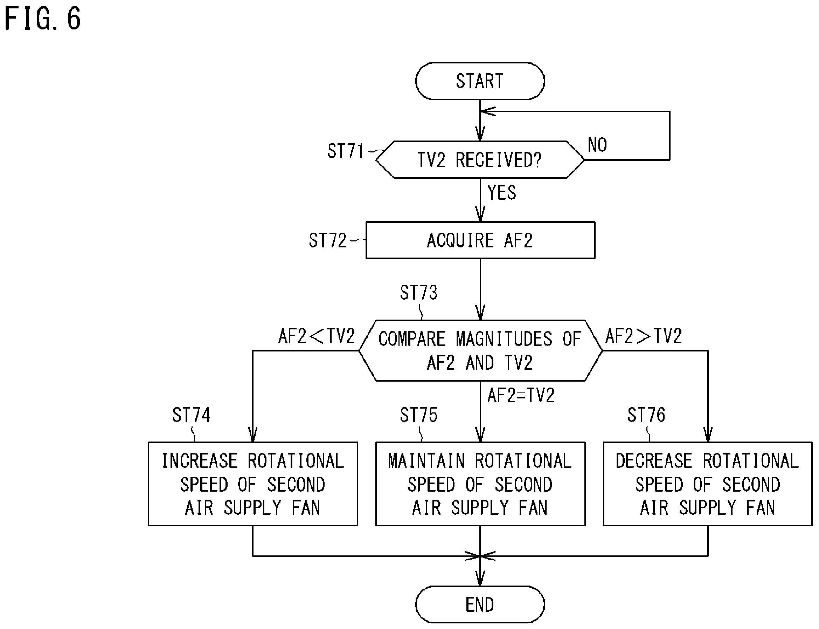

FIG. 6 is a flowchart illustrating an example of information processing of the second controller 25B.

As illustrated in FIG. 6, after startup, the second controller 25B determines whether or not TV2 has been received from the main controller 55 (step ST71), and if so, acquires AF2 from the detection result of the second air supply detector 23B (step ST72).

Next, the second controller 25B compares the magnitudes of the AF2 and the TV2 (step ST73), and executes the following processing according to the comparison result.

That is, if AF2 < TV2, the second controller 25B increases the rotational speed of the second air supply fan 22B by a predetermined amount (step ST74). If AF2 = TV2, the rotational speed is maintained (step ST75), and if AF2 > TV2, the rotational speed is decreased by a predetermined amount (step ST76).

In this manner, the second controller 25B autonomously adjusts the rotational speed of its own second air supply fan 22B on the basis of the TV2 received from the main controller 55 and the AF2 that can be detected by its own detector 23B.

Therefore, the second air supply unit 20B, including the second air supply fan 22B, the second air supply detector 23B, and the second controller 25B, corresponds to a unit capable of autonomously adjusting the second supply airflow AF2.

### Information Processing of Third Controller

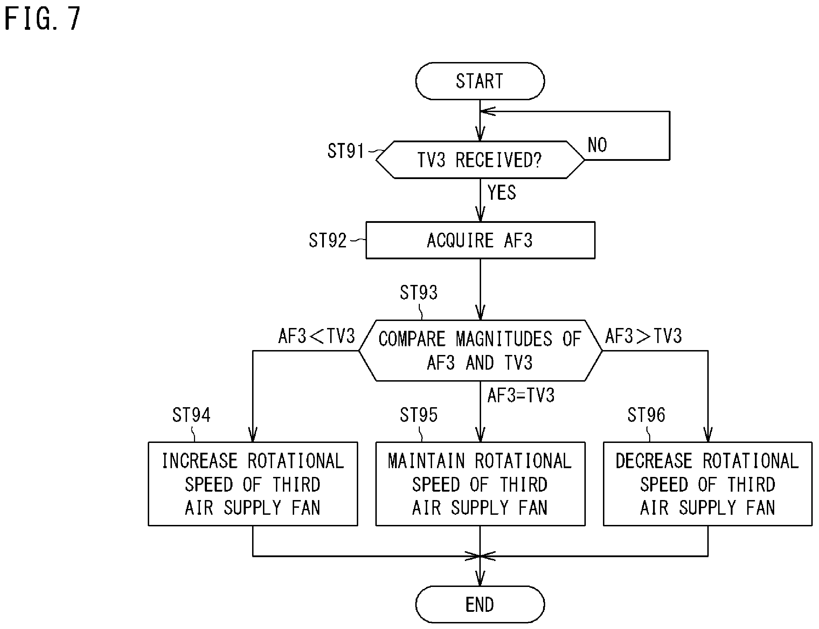

FIG. 7 is a flowchart illustrating an example of information processing of the third controller 44.

As illustrated in FIG. 7, after startup, the third controller 44 determines whether or not TV3 has been received from the main controller 55 (step ST91), and if so, acquires AF3 from the detection result of the exhaust detector 43 (step ST92).

Next, the third controller 44 compares the magnitudes of the AF3 and TV3 (step ST93), and executes the following processing according to the comparison result.

That is, if AF3 < TV3, the third controller 44 increases the rotational speed of the exhaust fan 42 by a predetermined amount (step ST94). If AF3 = TV3, the rotational speed is maintained (step ST95), and if AF3 > TV3, the rotational speed is decreased by a predetermined amount (step ST96).

In this manner, the third controller 44 autonomously adjusts the rotational speed of its own exhaust fan 42 on the basis of the TV3 received from the main controller 55 and the AF3 that can be detected by its own detector 43.

Therefore, the exhaust unit 40, including the exhaust fan 42, the exhaust detector 43, and the third controller 44, corresponds to a unit capable of autonomously adjusting the exhaust airflow AF3.

### First Modification

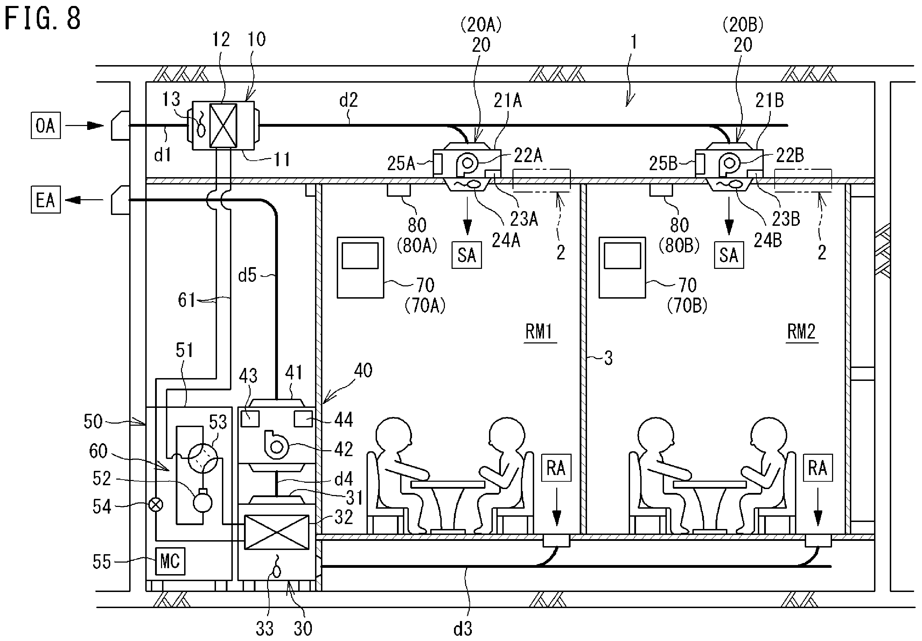

FIG. 8 is a longitudinal sectional view of a building illustrating another example of the overall configuration of the ventilation system 1.

The differences between the embodiment in FIG. 8 and the embodiment in FIG. 1 are as follows.

Difference 1: There are a plurality of target spaces RM1 and RM2 indoors, defined by an interior wall 3.

Difference 2: The air supply units 20A and 20B are installed in the target spaces RM1 and RM2, respectively.

Difference 3: The CO2 sensors 80A and 80B are installed in the target spaces RM1 and RM2, respectively.

Difference 4: Input devices 70A and 70B are installed in the target spaces RM1 and RM2, respectively, and settings can be input by the user to each of the input devices 70A and 70B.

Therefore, the embodiment in FIG. 8 has the advantage that the ventilation rate and the supply air temperature can be set for each of the target spaces RM1 and RM2, and the ventilation for suppressing the CO2 concentration can be individually executed in each of the target spaces RM1 and RM2.

### Second Modification

In the above-described embodiment, the CO2 sensor is exemplified as an example of the indoor monitoring sensor 80, but the monitoring sensor 80 may be, for example, the following sensors.
1) Suspended particle sensor: A sensor that detects the concentration of suspended particles such as smoke and dust
2) Odor sensor: A sensor that detects the degree of indoor odor
3) Presence sensor: A sensor that detects the presence or absence of people in a room
4) Number-of-people count sensor: A sensor that detects the number of people in a room

In the case of adopting the suspended particle sensor, it is only required to perform intervention control to increase the ventilation rate when the particle concentration becomes a predetermined value or more, and in the case of adopting the odor sensor, it is only required to perform intervention control to increase the ventilation rate when the degree of odor becomes a predetermined value or more.

Similarly, in the case of adopting the presence sensor, it is only required to perform intervention control to increase the ventilation rate in response to the detection of the presence of people, and in the case of adopting the number-of-people count sensor is adopted, it is only required to perform intervention control to increase the ventilation rate when the number of people becomes a predetermined value or more.

As described above, the monitoring sensor 80 that can be employed in the ventilation system 1 according to the present embodiment is not limited to the CO2 sensor, and may be any sensor that detects state information (such as CO2 concentration, particle concentration, odor level, presence or absence of people, and number of people), which is at least one of an indoor air state, the presence or absence of people indoors, and the number of people indoors.

### Third Modification

In the above-described embodiment, the air supply unit 20 and exhaust unit 40 without controllers may be adopted, and overall control to adjust the fan speed may also be performed by the main controller 55.

However, by adopting the air supply unit 20 and exhaust unit 40 with the controllers mounted as in the above-described embodiment, the main controller 55 and the first to third controllers 25A, 25B, and 44 perform control in a distributed manner, so that the processing load on the main controller 55 can be reduced, and less expensive control modules can be used.

In addition, in the above-described embodiment, since the controllers 25A and 25B relay the detection results of some measurement devices (for example, the CO2 sensor 80), the increase in signal lines can be suppressed as much as possible.

### Operation and Effect of Embodiment

(1) In the ventilation system 1 according to the present embodiment, the first heat exchanger 12 and the first air supply fan 22A and second air supply fan 22B located further toward an indoor side than the first heat exchanger 12 are included in the interior of the air supply path, so that the supply air SA subjected to a heat exchange can be supplied to a plurality of areas.

In addition, since the control unit CU (specifically, the first and second controllers 25A and 25B) executes the following first air supply control and second air supply control, it is possible to adjust each of the first supply airflow AF 1 and the second supply airflow AF2. Thus, the supply air SA subjected to a heat exchange can be supplied to the plurality of areas in an airflow adjustable manner.

First air supply control: Control to adjust the rotational speed of the first air supply fan 22A so that the first supply airflow AF 1 becomes a target value TV1

Second air supply control: Control to adjust the rotational speed of the second air supply fan 22B so that the second supply airflow AF2 becomes a target value TV2

(2) In the ventilation system 1 according to the present embodiment, the control unit CU (specifically, the main controller 55) determines the target value TV1 of the first supply airflow and the target value TV2 of the second supply airflow on the basis of the detection results of the monitoring sensors 80A and 80B.

Therefore, ventilation contributing to the improvement of the indoor environment (for example, ventilation that decreases the CO2 concentration) can be performed for each area.

(3) In the ventilation system 1 according to the present embodiment, since the control unit CU (specifically, third controller 44) executes the following exhaust control, the exhaust airflow AF3 can be adjusted. Therefore, for example, appropriate ventilation can be performed by balancing the sum of the first supply airflow AF1 and the second supply airflow AF2 with the exhaust airflow AF3.

Exhaust control: Control to adjust the rotational speed of the exhaust fan 42 so that the exhaust airflow AF3 becomes a target value TV3

(4) In the ventilation system 1 according to the present embodiment, the control unit CU (specifically, the main controller 55) determines the target value TV3 of the exhaust airflow and a controlled variable CQ for the refrigerant circuit 60 on the basis of the target value TV1 of the first supply airflow and the target value TV2 of the second supply airflow.

Thus, for example, the refrigerant circuit 60 can be controlled with an appropriate heat recovery amount while balancing the sum of the first supply airflow AF1 and the second supply airflow AF2 with the exhaust airflow AF3.

(5) In the ventilation system 1 according to the present embodiment, the first to third controllers 25A, 25B, and 44 adjust the fan speeds based on the target values TV1 to TV3, and the main controller 55 determines the target values TV1 to TV3 and the controlled variable CQ for the refrigerant circuit 60.

Thus, the processing load on the main controller 55 can be suppressed as compared with the case where the main controller 55 is responsible for all processing. Therefore, for example, the manufacturing cost of the ventilation system 1 can be reduced by, for example, using a controller for an air conditioner as the main controller 55.

(6) The ventilation system 1 according to the present embodiment further includes: the first air supply unit 20A that includes the first air supply fan 22A, the first air supply detector 23A, and the first controller 25A and is capable of autonomously adjusting the first supply airflow AF1; and the second air supply unit 20B that includes the second air supply fan 22B, the second air supply detector 23B, and the second controller 25B and is capable of autonomously adjusting the second supply airflow AF2.

Therefore, the first air supply unit 20A and the second air supply unit 20B can be placed in the same room RM or in different rooms RM1 and RM2, for example depending on user needs. Thus, the flexibility of the installation places of the air supply units 20A and 20B is improved.

(7) The ventilation system 1 according to the present embodiment further includes the exhaust unit 40 that includes the exhaust fan 42, the exhaust detector 43, and the third controller 44 and is capable of autonomously adjusting the exhaust airflow AF3. Thus, the exhaust unit 40 can be placed indoors or outdoors, for example depending on user needs. Thus, the flexibility of the installation place of the exhaust unit 40 is improved.

### Others

The present invention is not limited to the above exemplification, but is defined by claims, and is intended to include all modifications within the scope of the claims.

### REFERENCE SIGNS LIST

- 1: ventilation system
- 12: first heat exchanger
- 20A: first air supply unit
- 20B: second air supply unit
- 22A: first air supply fan
- 22B: second air supply fan
- 23A: first air supply detector
- 23B: second air supply detector
- 24A: first supply air temperature sensor
- 24B: second supply air temperature sensor
- 25A: first controller
- 25B: second controller
- 30: heat exchange unit
- 31: casing
- 32: second heat exchanger
- 33: return air temperature sensor
- 40: exhaust unit
- 42: exhaust fan
- 43: exhaust detector
- 44: third controller
- 52: compressor
- 53: four-way valve
- 54: expansion valve
- 55: main controller
- 60: refrigerant circuit
- 61: refrigerant pipe
- 70: input device (remote controller)
- 80: monitoring sensor (CO2 sensor)
- 80A: monitoring sensor (CO2 sensor)
- 80B: monitoring sensor (CO2 sensor)
- CU: control unit
- AF 1: first supply airflow
- AF2: second supply airflow
- AF3: exhaust airflow
- TV1: target value of first supply airflow
- TV2: target value of second supply airflow
- TV3: target value of exhaust airflow
- CQ: controlled variable for refrigerant circuit

## Claims

1. A ventilation system (1) comprising:
a refrigerant circuit (60) that circulates refrigerant through a compressor (52), a first heat exchanger (12), and a second heat exchanger (32);
a first air supply fan (22A) and a second air supply fan (22B) that supply outdoor air to an indoor space;
an exhaust fan (42) that exhausts indoor air to an outdoor space;
an air supply path that connects the outdoor space to the indoor space and has an interior in which the first heat exchanger (12) and the first air supply fan (22A) and second air supply fan (22B) located further toward an indoor side than the first heat exchanger (12) are adapted to be installed in a ceiling space of a target space;
an exhaust air path that connects the outdoor space to the indoor space and has an interior in which the second heat exchanger (32) and the exhaust fan (42) are arranged;
a first air supply detector (23A) for detecting a first supply airflow (AF1) blown out by the first air supply fan (22A);
a second air supply detector (23B) for detecting a second supply airflow (AF2) blown out by the second air supply fan (22B); and
a control unit (CU),
wherein the compressor (52), the exhaust fan (42), and the second heat exchanger (32) are adapted to be installed outdoors or inside a wall of the target space, the control unit (CU) executes
first air supply control to adjust a rotational speed of the first air supply fan (22A) so that the first supply airflow (AF1) becomes a target value (TV1), and
second air supply control to adjust a rotational speed of the second air supply fan (22B) so that the second supply airflow (AF2) becomes a target value (TV2).

2. The ventilation system (1) according to claim 1, further comprising a monitoring sensor (8oA, 80B) for detecting state information that is at least one of an indoor air state, presence or absence of people indoors, and number of people indoors,
wherein the control unit (CU) determines the target value (TV1) of the first supply airflow and the target value (TV2) of the second supply airflow on a basis of a detection result of the monitoring sensor (8oA, 80B).

3. The ventilation system (1) according to claim 1 or 2, further comprising an exhaust detector (43) for detecting an exhaust airflow (AF3) blown out by the exhaust fan (42),
wherein the control unit (CU) executes exhaust control to adjust a rotational speed of the exhaust fan (42) so that the exhaust airflow (AF3) becomes a target value (TV3).

4. The ventilation system (1) according to claim 3, wherein the control unit (CU) determines the target value (TV3) of the exhaust airflow and a controlled variable (CQ) for the refrigerant circuit (60) on a basis of the target value (TV1) of the first supply airflow and the target value (TV2) of the second supply airflow.

5. The ventilation system (1) according to claim 4, wherein the control unit (CU) includes:
a main controller (55) that determines the target value (TV1) of the first supply airflow, the target value (TV2) of the second supply airflow, the target value (TV3) of the exhaust airflow, and the controlled variable (CQ) for the refrigerant circuit (60);
a first controller (25A) that executes the first air supply control;
a second controller (25B) that executes the second air supply control; and
a third controller (44) that executes the exhaust control.

6. The ventilation system (1) according to claim 5, further comprising:
a first air supply unit (20A) that includes the first air supply fan (22A), the first air supply detector (23A), and the first controller (25A) and is capable of autonomously adjusting the first supply airflow (AF1); and
a second air supply unit (25B) that includes the second air supply fan (22B), the second air supply detector (23B), and the second controller (25B) and is capable of autonomously adjusting the second supply airflow (AF2).

7. The ventilation system (1) according to claim 5 or 6, further comprising an exhaust unit (40) that includes the exhaust fan (42), the exhaust detector (43), and the third controller (44) and is capable of autonomously adjusting the exhaust airflow (AF3).

## Patentansprüche

1. Lüftungssystem (1), umfassend:
einen Kältemittelkreislauf (60), der Kältemittel durch einen Verdichter (52), einen ersten Wärmetauscher (12) und einen zweiten Wärmetauscher (32) zirkuliert;
ein erstes Luftzufuhrgebläse (22A) und ein zweites Luftzufuhrgebläse (22B), die einem Innenraum Außenluft zuführen;
ein Abluftgebläse (42), das Innenraumluft zu einem Außenraum abgibt;
einen Luftzufuhrweg, der den Außenraum mit dem Innenraum verbindet und einen Innenraum aufweist, in dem der erste Wärmetauscher (12) und das erste Luftzufuhrgebläse (22A) und das zweite Luftzufuhrgebläse (22B), die weiter zu einer Innenraumseite hin angeordnet sind als der erste Wärmetauscher (12), dazu ausgelegt sind, in einem Deckenraum eines Zielraums installiert zu werden;
einen Abluftweg, der den Außenraum mit dem Innenraum verbindet und einen Innenraum aufweist, in dem der zweite Wärmetauscher (32) und das Abluftgebläse (42) angeordnet sind;
einen ersten Luftzufuhrdetektor (23A) zum Erfassen eines ersten Zufuhrluftstroms (AF1), der durch das erste Luftzufuhrgebläse (22A) ausgeblasen wird;
einen zweiten Luftzufuhrdetektor (23B) zum Erfassen eines zweiten Zufuhrluftstroms (AF2), der durch das zweite Luftzufuhrgebläse (22B) ausgeblasen wird; und
eine Steuereinheit (CU),
wobei der Verdichter (52), das Abluftgebläse (42) und der zweite Wärmetauscher (32) dazu ausgelegt sind, außerhalb oder innerhalb einer Wand des Zielraums installiert zu werden, die Steuereinheit (CU) ausführt
eine erste Luftzufuhrsteuerung, um eine Drehzahl des ersten Luftzufuhrgebläses (22A) so einzustellen, dass der erste Zufuhrluftstrom (AF1) ein Zielwert (TV1) wird, und
eine zweite Luftzufuhrsteuerung, um eine Drehzahl des zweiten Luftzufuhrgebläses (22B) so einzustellen, dass der zweite Zufuhrluftstrom (AF2) ein Zielwert (TV2) wird.

2. Lüftungssystem (1) nach Anspruch 1, ferner umfassend einen Überwachungssensor (80A, 80B) zum Erfassen von Zustandsinformationen, die mindestens eines von einem Innenraumluftzustand, Anwesenheit oder Abwesenheit von Personen in Innenräumen und Anzahl von Personen in Innenräumen sind,
wobei die Steuereinheit (CU) den Zielwert (TV1) des ersten Zufuhrluftstroms und den Zielwert (TV2) des zweiten Zufuhrluftstroms auf einer Basis eines Erfassungsergebnisses des Überwachungssensors (80A, 80B) bestimmt.

3. Lüftungssystem (1) nach Anspruch 1 oder 2, ferner umfassend einen Abluftdetektor (43) zum Erfassen eines Abluftluftstroms (AF3), der durch das Abluftgebläse (42) ausgeblasen wird,
wobei die Steuereinheit (CU) eine Abluftsteuerung ausführt, um eine Drehzahl des Abluftgebläses (42) so einzustellen, dass der Abluftluftstrom (AF3) ein Zielwert (TV3) wird.

4. Lüftungssystem (1) nach Anspruch 3, wobei die Steuereinheit (CU) den Zielwert (TV3) des Abluftluftstroms und eine gesteuerte Variable (CQ) für den Kältemittelkreislauf (60) auf einer Basis des Zielwerts (TV1) des ersten Zufuhrluftstroms und des Zielwerts (TV2) des zweiten Zufuhrluftstroms bestimmt.

5. Lüftungssystem (1) nach Anspruch 4, wobei die Steuereinheit (CU) umfasst:
eine Hauptsteuerung (55), die den Zielwert (TV1) des ersten Zufuhrluftstroms, den Zielwert (TV2) des zweiten Zufuhrluftstroms, den Zielwert (TV3) des Abluftluftstroms und die gesteuerte Variable (CQ) für den Kältemittelkreislauf (60) bestimmt;
eine erste Steuerung (25A), die die erste Luftzufuhrsteuerung ausführt;
eine zweite Steuerung (25B), die die zweite Luftzufuhrsteuerung ausführt; und
eine dritte Steuerung (44), die die Abluftsteuerung ausführt.

6. Lüftungssystem (1) nach Anspruch 5, ferner umfassend:
eine erste Luftzufuhreinheit (20A), die das erste Luftzufuhrgebläse (22A), den ersten Luftzufuhrdetektor (23A) und die erste Steuerung (25A) umfasst und in der Lage ist, den ersten Zufuhrluftstrom (AF1) autonom einzustellen; und
eine zweite Luftzufuhreinheit (25B), die das zweite Luftzufuhrgebläse (22B), den zweiten Luftzufuhrdetektor (23B) und die zweite Steuerung (25B) umfasst und in der Lage ist, den zweiten Zufuhrluftstrom (AF2) autonom einzustellen.

7. Lüftungssystem (1) nach Anspruch 5 oder 6, ferner umfassend eine Ablufteinheit (40), die das Abluftgebläse (42), den Abluftdetektor (43) und die dritte Steuerung (44) umfasst und in der Lage ist, den Abluftluftstrom (AF3) autonom einzustellen.

## Revendications

1. Système de ventilation (1) comprenant:
un circuit réfrigérant (60) assurant la circulation d'un réfrigérant dans un compresseur (52), un premier échangeur de chaleur (12), et un deuxième échangeur de chaleur (32) ;
un premier ventilateur d'alimentation en air (22A) et un deuxième ventilateur d'alimentation en air (22B), assurant la fourniture d'air extérieur dans un espace intérieur ;
une soufflante d'évacuation (42) refoulant l'air ambiant vers un espace extérieur ;
un chemin d'alimentation en air reliant l'espace extérieur à l'espace intérieur, et doté d'un intérieur dans lequel le premier échangeur de chaleur (12), et le premier ventilateur d'alimentation en air (22A) et le deuxième ventilateur d'alimentation en air (22B), situé davantage vers un côté intérieur que le premier échangeur de chaleur (12), sont adaptés pour être installés dans un espace de plafond d'un espace cible ;
un passage d'air d'évacuation reliant l'espace extérieur à l'espace intérieur, et dans l'intérieur duquel sont agencés le deuxième échangeur de chaleur (32) et la soufflante d'évacuation (42) ;
un premier détecteur d'arrivée d'air (23A) assurant la détection d'un premier débit d'air d'alimentation (AF1) refoulé par le premier ventilateur d'alimentation en air (22A) ;
un deuxième détecteur d'arrivée d'air (23B) assurant la détection d'un deuxième débit d'air d'alimentation (AF2) refoulé par le deuxième ventilateur d'alimentation en air (22B) ; et
un module de commande (CU),
le compresseur (52), la soufflante d'évacuation (42), et le deuxième échangeur de chaleur (32) étant adaptés pour être installés à l'extérieur, ou à l'intérieur d'une paroi de l'espace cible, le module de commande (CU) effectuant
la régulation d'une première fourniture d'air afin d'ajuster une vitesse de rotation du premier ventilateur d'alimentation en air (22A), afin que le premier débit d'air d'alimentation (AF1) devienne une valeur cible (TV1), et
la régulation d'une deuxième fourniture d'air afin d'ajuster une vitesse de rotation du deuxième ventilateur d'alimentation en air (22B) afin que le deuxième débit d'air d'alimentation (AF2) devienne une valeur cible (TV2).

2. Système de ventilation (1) selon la revendication 1, comprenant en outre un capteur de contrôle (80A, 80B) assurant la détection d'informations sur l'état, à savoir au moins un d'un état de l'air ambiant, la présence ou l'absence de personnes à l'intérieur, et le nombre de personnes à l'intérieur,
le module de commande (CU) déterminant la valeur cible (TV1) du premier débit d'air d'alimentation et la valeur cible (TV2) du deuxième débit d'air d'alimentation, d'après un résultat de la détection du capteur de contrôle (80A, 80B).

3. Système de ventilation (1) selon la revendication 1 ou 2, comprenant en outre un détecteur d'évacuation (43) pour détecter un débit d'air d'évacuation (AF3) refoulé par la soufflante d'évacuation (42),
le module de commande (CU) exécutant une régulation de l'évacuation pour ajuster une vitesse de rotation de la soufflante d'évacuation (42), afin que le débit d'air d'évacuation (AF3) devienne une valeur cible (TV3).

4. Système de ventilation (1) selon la revendication 3, le module de commande (CU) déterminant la valeur cible (TV3) du débit d'air d'évacuation et une variable contrôlée (CQ) pour le circuit réfrigérant (60) d'après la valeur cible (TV1) du premier débit d'alimentation en air et la valeur cible (TV2) du deuxième débit d'alimentation en air.

5. Système de ventilation (1) selon la revendication 4, le module de commande (CU) comprenant :
un régulateur principal (55) déterminant la valeur cible (TV1) du premier débit d'air d'alimentation, la valeur cible (TV2) du deuxième débit d'air d'alimentation, la valeur cible (TV3) du troisième débit d'air d'alimentation, et la variable contrôlée (CQ) pour le circuit réfrigérant (60) ;
un premier régulateur (25A) assurant la première régulation de l'air d'alimentation ;
un deuxième régulateur (25B) assurant la deuxième régulation de l'air d'alimentation ; et
un troisième régulateur (44) assurant la régulation de l'évacuation.

6. Système de ventilation (1) selon la revendication 5, comprenant en outre :
un premier distributeur d'air d'alimentation (20A) comprenant le premier ventilateur d'alimentation en air (22A), le premier détecteur d'arrivée d'air (23A), et le premier régulateur (25A), et étant capable d'ajuster de façon autonome le premier débit d'air d'alimentation (AF1) ; et
un deuxième distributeur d'air d'alimentation (25B) comprenant le deuxième ventilateur d'alimentation en air (22B), le deuxième détecteur d'arrivée d'air (23B), et le deuxième régulateur (25B), et étant capable d'ajuster de façon autonome le deuxième débit d'air d'alimentation (AF2).

7. Système de ventilation (1) selon la revendication 5 ou 6, comprenant en outre un dispositif d'évacuation (40) comprenant la soufflante d'évacuation (42), le détecteur d'évacuation (43), et le troisième régulateur (44), et étant capable d'ajuster de façon autonome le débit d'air d'évacuation (AF3).
